# EUROPEAN PATENT SPECIFICATION

(11) **EP 2 598 379 B1**
(45) Date of publication and mention of the grant of the patent: **25.02.2015**
(21) Application number: 11735874.7
(22) Date of filing: 22.07.2011
(51) Int. Cl.: B60R 13/02, F16B 21/07

(54) **FASTENER AND FASTENER ASSEMBLY COMPRISING A FASTENER**
BEFESTIGUNGSELEMENT UND BEFESTIGUNGSANORDNUNG MIT EINEM BEFESTIGUNGSELEMENT
ÉLÉMENT DE FIXATION ET ENSEMBLE DE FIXATION AVEC UN TEL ÉLÉMENT DE FIXATION

(30) Priority: 30.07.2010 DE 202010008192 U
(43) Date of publication of application: 05.06.2013
(73) Proprietor: Newfrey LLC, Newark, Delaware 19711 (US)
(72) Inventor: SCHMIDT, Thomas, 35394 Gießen (DE); KEMPF, Christian, 35394 Gießen (DE); REINDL, Johann, 35394 Gießen (DE)
(74) Representative: Haar, Lucas Heinz Jörn
(86) International application number: PCT/EP2011/062622
(87) International publication number: WO 2012/013592

(56) References cited:
- EP-A2- 0 964 170
- WO-A1-2009/141138
- DE-A1- 3 918 440
- DE-U1- 8 529 669

## Description

The invention relates to a fastener for the fastening of an attaching or covering part to a supporting part, in particular a part of the body of a motor vehicle, and a fastener assembly comprising a fastener.

Fastening devices of the kind indicated are used chiefly in automobile construction, to fasten attaching or covering parts to the body or parts of the body of an automobile such as doors or the like. Here, fastening should be able to take place as simply as possible and without the aid of tools, and the requirement frequently exists to compensate for dimensional inaccuracies of the parts in the region of the fastening devices.

A variety of fastening devices of the kind indicated are known for example from EP 0 020 308 A1, EP 1 895 171 A2 and US 6,196,607 B1. Common to the known fastening devices is that a pin-shaped element, which is connected locking with the supporting part by insertion into an opening of the supporting part, is provided as connecting part. Here, it is disadvantageous that the supporting part must have openings at the fastening points and that additional means such as a shield-like plate and, if necessary, additional sealing rings have to be provided in order to be able to seal these openings in assembly of the attaching or covering parts.

DE 100 53 200 C2 discloses a connecting element for the connection of a covering part with a supporting part of a motor vehicle, in which a first fastening part and a second fastening part are connected together by an intermediate element. The first fastening part can be connected with the intermediate element by a snap connection and the second fastening part can be connected with the intermediate element by a catch connection. The catch connection is designed to permit the distance between the first and the second fastening part to be adjusted within limits to a desired value, while the holding force of the catch connection is designed to be substantially greater than the holding force of the snap connection so that, upon reassembly, the distance between the first and the second fastening part does not vary. Here, the first fastening part may be fastened to a covering part that has a sprayed-on flap with an opening in which the first fastening part is held by means of disks located on both sides of the opening. For fastening of the second fastening part to a supporting part, the supporting part has an opening through which an anchor of the second fastening part is slipped and can be locked by turning of the second fastening part about its axis.

Also disclosed in DE 10 2008 033,307 A1 is fastening device for the fastening of an attaching or covering part to a supporting part, in which a connecting part has a flange capable of introduction through an opening into an accommodating part and a fastening section which has an opening for the accommodation of a holding bolt standing away from the holding part. Arranged in the opening are elastic locking fingers, by which the holding bolt, provided with a head, is capable of being firmly held in the fastening section.

DE 39 18 440 A1 discloses a fastener for releasably holding an elongated member. The fastener comprises a body and a slide member. The body includes a shank which is insertable into an aperture on a panel when the fastener is installed and a head member having a first seat portion offset from the shank. The slide member is molded as one integral unit with a thin, fragil flashing holding the slide member onto the tip of the shank. The slide member has a second seat portion offset from the shank which is positionable in opposed facing alignment with the first seat portion of the head member. After separating the flashing the slide member is moveable along the shank to a seat closed position and is lockable with ledge means at the shank to secure the first and second seat portions together in the seat closed position.

The object of the invention is to procure a fastener of the kind mentioned, which permits adjustment and fixing of the spacing of the parts to be connected together and is easy to handle. In addition, the fastener is designed to be simple and inexpensive to produce and not require any special tools for its assembly. Further, the fastener is to permit a fastener assembly which ensures reliable sealing of the fastening parts to the supporting part and, if necessary, to the covering part as well.

According to the invention, this object is accomplished by a fastener having the features indicated in Claim 1. Advantageous refinements of the fastener are indicated in Claims 2 to 14. An advantageous fastener assembly with use of a fastener according to the invention is indicated in Claim 15 and advantageous refinements of the fastener assembly are indicated in Claims 16 to 18.

According to the invention, the fastener for the fastening of an attaching or covering part to a supporting part, in particular to a part of the body of a motor vehicle, comprises a first fastening section which has an outer surface extending along an axis, a second fastening section, which has an opening, suitable for the accommodation of the first fastening section, with an inner surface extending along the axis, and a catch connection designed for connecting the outer surface with the inner surface, which permits adjustment of the axial distance between the first and the second fastening section, where the first fastening section is connected with the second fastening section by at least one predetermined breaking point or at least one predetermined breaking member, wherein one of the fastening sections is designed as a hollow body, wherein one end of the hollow body has an insert opening for a holding bolt and wherein holding means for holding the holding bolt are arranged on the inner side of the hollow body.

Owing to connection of the two fastening sections with a predetermined breaking point or a predetermined breaking member, the fastener according to the invention first forms a one-piece part which is easy to handle and to assemble. The two fastening sections are held by the predetermined breaking point or the predetermined breaking member in an alignment to each other that is optimal for the subsequent assembly. In assembly, a fastening section can first be connected with the structural part assigned to it, for example the second fastening section with the covering part. Then, the pre-assembled unit of structural part and fastener can be connected with the other structural part, for example the supporting part, and then assembly may be continued as in the case of a one-piece fastener. After this first assembly step, the two structural parts are held together by the fastener in a pre-assembly position and, by a subsequent assembly step, can now be connected more firmly and brought into the desired distance apart from each other. At the same time, the predetermined breaking point or the predetermined breaking member is separated and the fastening sections are moved about the required amount to each other, whereupon the first fastening section penetrates into the opening of the second fastening section and the parts of the catch connection formed on the outer and inner surfaces of the fastening sections are latched together and the two fastening sections are thereby firmly connected together. The catch connection adjustable in the axial direction fixes the two fastening sections to each other with so high a holding force that detachment of the fastener from one of the two structural parts is possible without detachment of the fixation of the catch connection. The distance between the structural parts, once adjusted, therefore is also maintained in any disassembly and re-assembly of the fastening element, for example for purposes of repair.

According to the invention, the first and the second fastening section may adjoin each other directly. However, it may alternatively be provided that the first fastening section is located at some distance from the second fastening section and the fastening sections are connected together by a plurality of predetermined breaking members bridging the distance.

According to the invention, the catch connection may be formed by an outer toothing on the outer surface of the first fastening section and an inner toothing on the inner surface of the second fastening section cooperating with the outer toothing. For facilitating latching with simultaneously high resistance to detachment by pulling, it is advantageous when the outer toothing and/or the inner toothing is designed sawtooth-like, where the teeth of the toothing in each instance have a steep locking flank and a less steep ramp flank and the ramp flanks of the outer toothing and/or inner toothing of a fastening section are turned toward the other fastening section in each instance. For latching, the fastening sections are pressed into each other, and the ramp flanks promote sliding of the teeth of the toothings over each other. In the opposite direction, the locking flanks are effective and prevent detachment of the latched catch connection.

The outer toothing and the inner toothing may, according to the invention, have like tooth spacing in the axial direction. However, it may alternatively be provided that one toothing has a smaller tooth spacing than the other, so as to obtain smaller adjusting steps. In addition, it may be provided that the outer toothing and/or the inner toothing extends over the entire periphery of the outer and/or inner surface. On the other hand, it may alternatively suffice and for technical reasons relating to production be advantageous when the outer toothing and/or the inner toothing extends over only at least one peripheral section of the outer surface or the inner surface. If outer and inner toothing extend only over at least one peripheral section, limiting ribs running in the axial direction may be provided, which prevent the toothings engaging in each other from being brought out of engagement by twisting of one fastening section with respect to the other.

According to an additional proposal of the invention, latching of the catch connection may be facilitated in that the first and/or the second fastening section is elastically deformable radially to the axis in the region of the outer or inner toothing. Radial deformability may for example be achieved in simple fashion in that the peripheral sections of a fastening section provided with an outer or inner toothing are designed bendable in the radial direction.

Fixing of the adjusted catch position of the catch connection may, according to another proposal of the invention, additionally be secured in that the outer surface and/or the inner surface of the respective fastening section is provided with a coating of adhesive material. The adhesive material may be capable of activation by pressure or by heat.

According to the invention, a fastening section, preferably the first, is designed as a hollow member, where one end of the hollow member has an insertion opening for a bolt and where on the inner side of the hollow member are formed holding means for firmly holding the bolt. The holding means preferably have at least one flexible locking finger, which extends from the insert opening obliquely inward into the cavity. This design allows a small compressive force, with simultaneously high resistance to detachment, to be obtained for assembly of the fastener on the bolt. In addition, guide ribs for guiding and centering the holding bolt may be arranged in the cavity.

Moreover, one fastening section, preferably the second, may have a flange extending radially to the axis, which is capable of connection with a structural part, in particular a covering part.

The fastener preferably is formed in one piece of thermoplastic synthetic material. However, multi-part production of the fastener is likewise possible.

An advantageous fastener assembly using a fastener according to the invention comprises a bolt having a shank, which is fastened by a foot end to a supporting part, and a thickened head, which is firmly held in the first fastening section of the fastener by holding means snapping in elastically, and additionally an accommodating part connected with a covering part, which accommodating part has a pocket with a lateral opening and a lead-in slot, where the fastener is inserted through the lateral opening into the accommodating part so that the second fastening section engages in the pocket. The foot end of the bolt preferably is welded to the supporting part. The supporting part therefore requires no opening for fastening of the bolt, so that complete sealing of the fastening point on the supporting part is ensured. The accommodating part may be integrated into the covering part. In the finish-assembled and adjusted state of the fastener assembly, the at least one predetermined breaking point of the fastener is separated and the fastening sections are firmly latched together.

The invention is explained in detail below by an exemplary embodiment, which is shown in the drawing, wherein:
Figure 1 shows a side view A of a fastener according to the invention,
Figure 2, a top view of the fastener of Figure 1,
Figure 3, a cross section through the fastener of Figure 1,
Figure 4, a side view B of the fastener of Figure 1,
Figure 5, a fastener assembly comprising a fastener of Figure 1 in the pre-assembled state and
Figure 6, the fastener assembly of Figure 5 in the final assembly state.

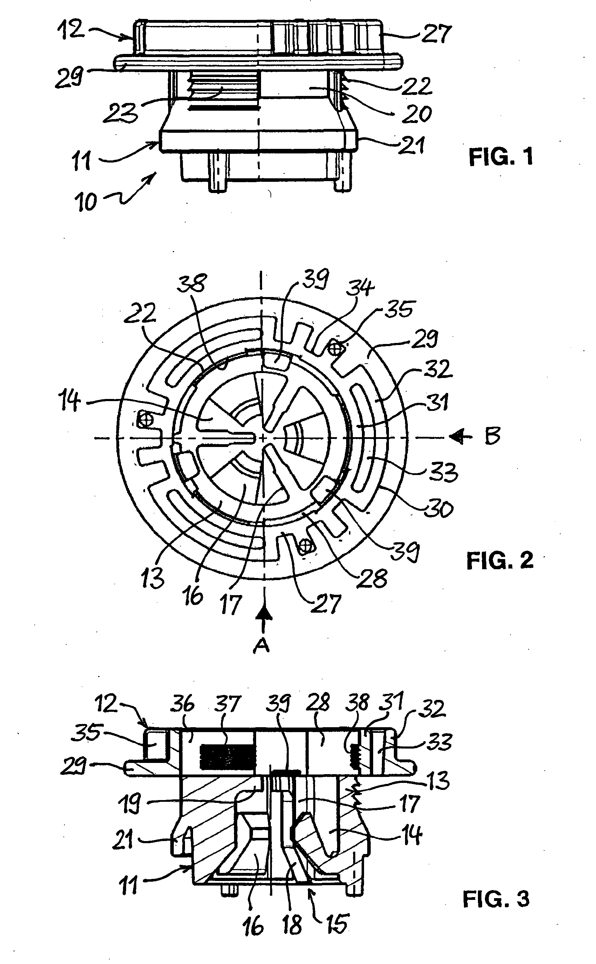

The fastener 10 shown in Figures 1 to 4 has a first fastening section 11 and a second fastening section 12. Both fastening sections 11, 12 are designed rotationally symmetrical with reference to a common axis and are divided into three substantially equal sectors.

The first fastening section 11 has the form of a hollow member with a substantially cylindrical wall 13, which surrounds a cavity 14 open at both ends. The cavity 14 has on the side opposite the second fastening section 12 an insert opening 15 and contains three flexible locking fingers 16 spaced evenly apart and guide ribs 17 lying between them. The locking fingers 16 are formed on the wall 13 near the lead-in opening 15 and extend obliquely in the direction of the center of the cavity 14 and in the direction of the fastening section 12. The guide ribs 17 run in the axial direction and are provided at the insert opening 15 with inclined lead-in surfaces 18. At their ends adjacent to the fastening section 12, the guide ribs 17 have stop noses 19 directed radially inward, which limit the depth of insertion.

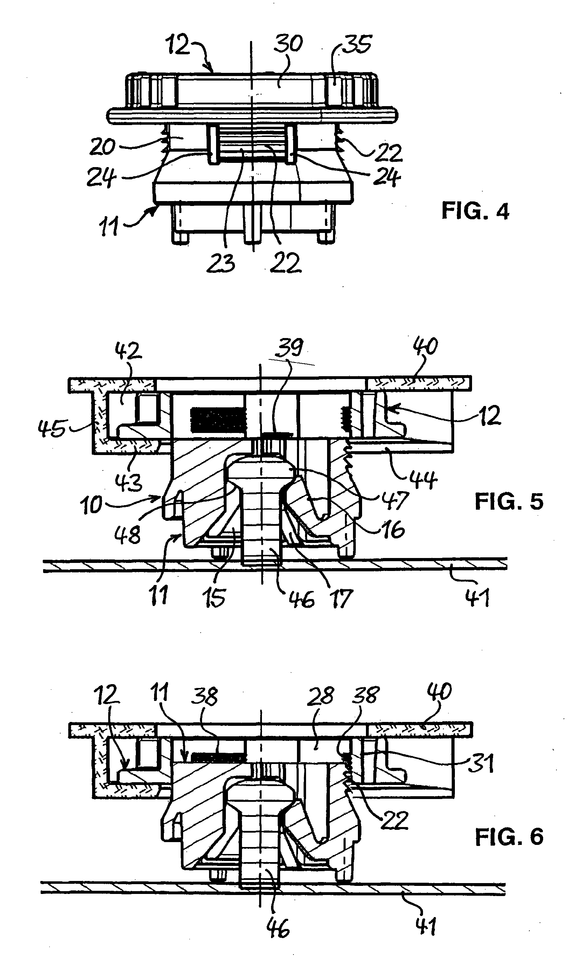

On its outer side, the fastening section 11 has a cylindrical outer surface 20, which extends from the end adjoining the fastening section 12 all the way to a tapered collar 21, the outside diameter of which increases with increasing distance from the fastening section 12. The outer surface 20 has an outer toothing 22, which consists of three sections 23 arranged at an even peripheral distance apart, which in each instance extend in the peripheral direction over a sector angle of 45°. The outer toothing 22 has teeth shaped sawtooth-like, with locking flanks running radially and ramp flanks inclined at an angle of approximately 45°, which are turned toward the fastening section 12. As can be seen in Figure 4, at least one section of the outer toothing is limited at its peripheral end by limiting ribs 24 running parallel to the axes, which have approximately the same height as the teeth of the outer toothing 22.

The second fastening section 12 has the form of a ring with an annular wall 27 and a central cylindrical opening 28, the inside diameter of which is slightly greater than the outside diameter of the outer surface 20 of the fastening section 11. On the side turned toward the fastening section 11, the fastening section 12 forms a flat flange 29, projecting outward radially over the annular wall 27. The wall 27 has three wall sections 30, arranged at even distances apart, which are designed double-walled and have an inner wall 31 and an outer wall 32, which are separated from each other by a slot 33. The wall sections 30 extend in the peripheral direction over a sector angle of about 70° and are in each instance arranged central to radial planes, which divide the sections 23 of the outer toothing 22 of the first fastening section 11 in the center. As a result of this design, the inner walls 31 of the wall sections 30 are elastically yielding radially in their central region, while the outer walls 32, owing to their connection to the flange 29, have a greater radial stiffness. Between the wall sections 30 there extend in the peripheral direction wall sections 34, which are connected with the flange 29 and on their outer side have stiffening ribs 35.

On the sections of the inner surface 36 of the opening 28 formed by the walls 31 are arranged sections 38 of an inner toothing 38. The sections 38 have approximately the same peripheral length and lie in the same sectors as the sections 23 of the outer toothing 22 of the fastening section 11. The teeth of the inner toothing 38 likewise have a saw-tooth profile with ramp flanks on the side turned toward the fastening section and locking flanks on the opposite side. However, the spacing of the teeth of the inner toothing 38 is smaller than that of the outer toothing 22.

The fastening sections 11, 12 are firmly connected together in an arrangement by predetermined breaking members 39, in which the end of the fastening section 11 opposite the insert opening 15 is found right before the opening 28 of the fastening section 12. The predetermined breaking members 39 have the form of parallelepiped flat burls and are arranged at the front side of the fastening section 11 adjoining the fastening section 12. The predetermined breaking members 39 project into the opening 28 of the fastening section 12 and at the inner edge of the opening 28 are converted into the annular wall 27. The members 39 thus connect the fastening sections 11, 12 to a structural unit, which may be produced in the injection molding process in one piece of a thermoplastic synthetic material.

Figure 5 shows a preferred use of the fastener 10 for the fastening of a covering part 40 to a supporting part 41. Here, the covering part 40 has a formed-on pocket 42, into which the fastening section 12 of the fastener 10 can be inserted. The pocket consists of a plate 43, arranged at some distance from the covering part 40, with a lead-in slot 44 open on one side, into which the fastening section 11 can be introduced. The plate 43 is fastened to the covering part 40 by a U-shaped wall 45 surrounding the lead-in slot 44 at some distance. The pocket 42 is dimensioned great enough that the fastener 10 with its fastening section 12, as shown in Figure 5, is inserted into the pocket 42 by a movement parallel to the plate 43 and can be held by light axial clamping between the covering part 40 and the plate 43. In the radial direction, the fastener 10 is to some extent movable in the pocket 42 for offsetting dimensional tolerances.

After application of the fastener 10 to the covering part 40, the fastener 10, together with the covering part 40, is fastened to the supporting part 41. The supporting part 41 has on the fastening parts a welded-on bolt 46, which stands away from the supporting part 41, and a head 47 with a diameter greater than the shank of the bolt. The head 47 has a convexly curved front side for facilitating insertion. On the back side turned toward the supporting part 41, the head forms a tapered contact surface 48 for the locking fingers 16. The degree of inclination of the contact surface 48 influences the pull-off force that is required for detachment of the fastener 10 from the bolt 46.

For fastening of the covering part 40 to the supporting part 41, the covering part 40 with the fastener 10 is first moved toward the supporting part 41 so that the bolt 46 can penetrate into the insert opening 15 of the fastener 10. The fastener 10 is then pressed through the covering part 40 with such a force on the supporting part 41 that the bolt 46, guided by the guide ribs 17, penetrates into the first fastening section 11 of the fastener 10, where its head 47 spreads apart the locking fingers 16 and slides through them. As soon as the head 47 has reached the end position shown in Figure 5, the locking fingers 16 spring back into their starting position and are supported by their end surfaces on the contact surface 48 of the head.

In the pre-assembly position so reached and shown in Figure 5, the covering part 40 is held by the fastener 10 on the supporting part 41, but its distance from the supporting part 41 is too great and must still be adjusted to the desired extent. For this purpose, with the aid of a suitable device and by use of an elevated press-on force, the covering part 40 is moved all the way to the desired extent up to the supporting part 41. In the case of door coverings, a spacer may be used as device, the thickness of which corresponds to the slot size that is to exist between the door covering and a neighboring part, for example an instrument panel. By closing of the door, the door covering supported by the spacer on the instrument panel is brought into the position on the door that the desired slot size has with respect to the instrument panel. In this adjusting operation, the predetermined breaking members 39 of the fastener 10 are separated and the first fastening section 11 penetrates into the opening 28 of the second fastening section 12. Depending upon the magnitude of the movement of approach of the covering part 40, a smaller or greater number of teeth of the outer toothing 22 jumps over the teeth of the inner toothing 38, whereupon the latter, because of the flexibility of the inner walls 31, are able to move radially outward.

In the exemplary end position of the covering part 40 shown in Figure 6 with reference to the supporting part 41, some of the teeth of the outer toothing 22 and inner toothing 38 are latched together and thereby form a catch connection, by which the fastening sections 11, 12 are fastened together in the position reached. The catch connection is designed so that its loadability in the direction of pull with sufficient distance is greater than the force for pulling the fastener 10 off from the bolt 46 of the supporting part 41. In addition, the loadability of the catch connection by pressure with a distance is greater than the compressive force that is required to press the fastener 10 onto the bolt 46. The adjustment of the distance between the covering part 40 and the supporting part 41 reached by selective latching of the outer toothing 22 with the inner toothing 38 therefore remains unchanged even in disassembly and reassembly of the covering part 40 and does not require renewed adjustment each time.

Figure 6 shows an example in which the minimum distance between the covering part 40 and the supporting part 41 is not yet reached. The minimum distance in the case of the fastener 10 is determined by the tapered collar 21, which allows the force for press-on of the covering part to increase significantly when the annular wall 27 comes into contact with the collar 21.

The fastener described is especially suitable for the fastening of door coverings in motor vehicles. Owing to its adjustability, the size of the slot between the door covering and structural parts adjoining it can be adjusted in simple fashion with the required accuracy. The fastener further allows destruction-free disassembly by overcoming the holding force of its flexible locking fingers, the adjusted size of the slot being maintained here too. The fastener additionally permits fastener assemblies that are watertight, because the supporting part requires no fastening opening. Lastly, owing to the design of the connection between the fastener and the covering part, dimensional tolerances transverse to the axis of the fastener can be offset.

## Claims

1. Fastener (10) for the fastening of an attaching or covering part to a supporting part, in particular a part of the body of a motor vehicle, having a first fastening section (11) which has an outer surface (20) extending along an axis, a second fastening section (12) which has an opening (28), suitable for the accommodation of the first fastening section (11), with an inner surface (36) extending along the axis, and a catch connection designed for connecting the outer surface (20) with the inner surface (36), which permits adjustment of the axial distance between the first and the second fastening section (11, 12), wherein the first fastening section (11) is connected with the second fastening section (12) by at least one predetermined breaking point or at least one predetermined breaking member (39), **characterized in that** one of the fastening sections (11, 12) is designed as a hollow body, wherein one end of the hollow body has an insert opening (15) for a holding bolt (46) and wherein holding means for holding the holding bolt (46) are arranged on the inner side of the hollow body.

2. Fastener according to Claim 1, **characterized in that** the first and second fastening sections (11, 12) are arranged at some distance apart and are connected together by a plurality of predetermined breaking members (39) bridging the distance.

3. Fastener according to either of Claims 1 or 2, **characterized in that** the catch connection is formed by an outer toothing (22) on the outer surface (20) and an inner toothing (38) on the inner surface (36) cooperating with the outer toothing (22).

4. Fastener according to Claim 3, **characterized in that** the outer toothing (22) and/or the inner toothing (38) is shaped sawtooth-like, while the teeth in each instance have a steep locking flank and a less steep ramp flank and the ramp flanks of the outer toothing (22) and/or inner toothing (38) of a fastening section (11 or 12) are turned toward the other fastening section (12 or 11) in each instance.

5. Fastener according to either of Claims 3 or 4, **characterized in that** the outer toothing (22) or the inner toothing (38) of a fastening section (11 or 12) has a smaller tooth spacing than the inner toothing (38) or the outer toothing (22) of the other fastening section (12 or 11).

6. Fastener according to any of Claims 3 to 5, **characterized in that** the outer toothing (22) and/or the inner toothing (38) forms a closed ring.

7. Fastener according to any of Claims 3 to 5, **characterized in that** the outer toothing (22) and/or the inner toothing (38) extends over at least one peripheral section of the outer surface (20) or of the inner surface (36).

8. Fastener according to Claim 7, **characterized in that** limiting ribs (24) running in the axial direction are arranged at the peripheral ends of the at least one peripheral section of the outer toothing (22) or the inner toothing (38).

9. Fastener according to any of Claims 3 to 8, **characterized in that** the first and/or the second fastening section (11, 12) is elastically deformable radially to the axis in the region of the outer toothing (22) or the inner toothing (38).

10. Fastener according to any of the preceding claims, **characterized in that** the outer surface (20) and/or the inner surface (36) is provided with a coating of adhesive material, which is capable of activation by pressure or heat.

11. Fastener according to any of the preceding claims, **characterized in that** the holding means have at least one flexible locking finger (16), which extends from the insert opening (15) obliquely inward into the cavity.

12. Fastener according to any of the preceding claims, **characterized in that** one of the fastening sections (12) has a flange (29) extending radially to the axis.

13. Fastener according to any of the preceding claims, **characterized in that** it is formed in one piece of thermoplastic synthetic material.

14. Fastener assembly comprising a fastener according to any of the preceding claims, **characterized by** a bolt (46) with a shank, which is fastened by a foot end to a supporting part (41) and has a thickened head (47), which is firmly held in the first fastening section (11) of the fastener (10) by holding means snapping in elastically and by an accommodating part connected with a covering part (40), which has a pocket (42) with a lateral opening and a lead-in slot (44), wherein the fastener (10) is inserted through the lateral opening into the accommodating part so that the second fastening section (12) engages in the pocket (42).

15. Fastener assembly according to Claim 14, **characterized in that** the foot end of the bolt (46) is welded onto the supporting part (41).

16. Fastener according to either of Claims 14 or 15, **characterized in that** the accommodating part is integrated into the covering part (40).

17. Fastener assembly according to any of Claims 14 to 16, **characterized in that** in the finish-assembled and adjusted state the at least one predetermined breaking point (39) of the fastener (10) is separated and the fastening sections (11, 12) are firmly latched together.

## Patentansprüche

1. Befestigungselement (10) zur Befestigung eines Anbau- oder Verkleidungsteils an einem Trägerteil, insbesondere einem Karosserieteil eines Kraftfahrzeugs, mit einem ersten Befestigungsabschnitt (11), der eine sich längs einer Achse erstreckende Außenfläche (20) aufweist, mit einem zweiten Befestigungsabschnitt (12), der eine zur Aufnahme des ersten Befestigungsabschnitts (11) geeignete Öffnung (28) mit einer sich längs der Achse erstreckenden Innenfläche (36) aufweist, und mit einer zum Verbinden die Außenfläche (20) mit der Innenfläche (36) ausgebildeten Rastverbindung, die eine Einstellung des axialen Abstands zwischen dem ersten und dem zweiten Befestigungsabschnitt (11, 12) ermöglicht, wobei der erste Befestigungsabschnitt (11) mit dem zweiten Befestigungsabschnitt (12) durch wenigstens eine Sollbruchstelle oder wenigstens ein Sollbruchglied (39) verbunden ist, **dadurch gekennzeichnet, dass** einer der Befestigungsabschnitte (11, 12) als Hohlkörper ausgebildet ist, wobei ein Ende des Hohlkörpers eine Einstecköffnung (15) für einen Haltebolzen (46) aufweist und wobei auf der Innenseite des Hohlkörpers Haltemittel zum Festhalten des Haltebolzens (46) angeordnet sind..

2. Befestigungselement nach Anspruch 1, **dadurch gekennzeichnet, dass** der erste und zweite Befestigungsabschnitt (11, 12) in einem Abstand voneinander angeordnet und durch mehrere den Abstand überbrückende Sollbruchglieder (39) miteinander verbunden sind.

3. Befestigungselement nach einem der Ansprüche 1 oder 2, **dadurch gekennzeichnet, dass** die Rastverbindung von einer Außenverzahnung (22) auf der Außenfläche (20) und einer mit der Außenverzahnung (22) zusammenwirkenden Innenverzahnung (38) auf der Innenfläche (36) gebildet ist.

4. Befestigungselement nach Anspruch 3, **dadurch gekennzeichnet, dass** die Außenverzahnung (22) und/oder die Innenverzahnung (38) sägezahnartig ausgebildet ist, wobei die Zähne jeweils eine steile Sperrflanke und eine weniger steile Rampenflanke aufweisen und die Rampenflanken von Außenverzahnung (22) und/oder Innenverzahnung (38) eines Befestigungsabschnitts (11 bzw. 12) dem jeweils anderen Befestigungsabschnitt (12 bzw. 11) zugekehrt sind.

5. Befestigungselement nach einem der Ansprüche 3 oder 4, **dadurch gekennzeichnet, dass** die Außenverzahnung (22) oder die Innenverzahnung (38) eines Befestigungsabschnitts (11 bzw. 12) einen kleineren Zahnabstand hat als die Innenverzahnung (38) oder die Außenverzahnung (22) des anderen Befestigungsabschnitts (12 bzw. 11).

6. Befestigungselement nach einem der Ansprüche 3 bis 5, **dadurch gekennzeichnet, dass** die Außenverzahnung (22) und/oder die Innenverzahnung (38) einen geschlossenen Ring bildet.

7. Befestigungselement nach einem der Ansprüche 3 bis 5, **dadurch gekennzeichnet, dass** die Außenverzahnung (22) und/oder die Innenverzahnung (38) sich über wenigstens einen Umfangsabschnitt der Außenfläche (20) bzw. der Innenfläche (36) erstreckt.

8. Befestigungselement nach Anspruch 7, **dadurch gekennzeichnet, dass** an den Umfangsenden des wenigstens einen Umfangsabschnitts der Außenverzahnung (22) oder der Innenverzahnung (38) in axialer Richtung verlaufende Begrenzungsrippen (24) angeordnet sind.

9. Befestigungselement nach einem der Ansprüche 3 bis 8, **dadurch gekennzeichnet, dass** der erste und/oder der zweite Befestigungsabschnitt (11, 12) im Bereich der Außenverzahnung (22) bzw. Innenverzahnung (12) radial zur Achse elastisch verformbar ist.

10. Befestigungselement nach einem der vorhergehenden Ansprüche, **dadurch gekennzeichnet, dass** die Außenfläche (20) und/oder die Innenfläche (36) mit einem Auftrag aus Klebstoff versehen ist, der durch Druck oder Wärme aktivierbar ist.

11. Befestigungselement nach einem der vorhergehenden Ansprüche, **dadurch gekennzeichnet, dass** die Haltemittel wenigstens einen federnden Sperrfinger (16) aufweisen, der sich von der Einstecköffnung (15) schräg nach innen in den Hohlraum erstreckt.

12. Befestigungselement nach einem der vorhergehenden Ansprüche, **dadurch gekennzeichnet, dass** einer der Befestigungsabschnitte (12) einen sich radial zur Achse erstreckenden Flansch (29) aufweist.

13. Befestigungselement nach einem der vorhergehenden Ansprüche, **dadurch gekennzeichnet, dass** es in einem Stück aus thermoplastischem Kunststoff urgeformt ist.

14. Befestigungsanordnung mit einem Befestigungselement nach einem der vorhergehenden Ansprüche, **gekennzeichnet durch** einen Bolzen (46) mit einem Schaft, der mit einem Fußende an einem Trägerteil (41) befestigt ist und einen verdickten Kopf (47) aufweist, der in dem ersten Befestigungsabschnitt (11) des Befestigungselements (10) **durch** federnd einschnappende Haltemittel festgehalten ist und **durch** ein mit einem Verkleidungsteil (40) verbundenes Aufnahmeteil, das eine Tasche (42) mit einer seitlichen Öffnung und einen Einführschlitz (44) aufweist, wobei das Befestigungselement (10) durch die seitliche Öffnung so in das Aufnahmeteil eingesetzt ist, dass der zweite Befestigungsabschnitt (12) in die Tasche (42) eingreift.

15. Befestigungsanordnung nach Anspruch 14, **dadurch gekennzeichnet, dass** der Bolzen (46) mit dem Fußende an das Trägerteil (41) angeschweißt ist.

16. Befestigungselement nach einem der Ansprüche 14 oder 15, **dadurch gekennzeichnet, dass** das Aufnahmeteil in das Verkleidungsteil (40) integriert ist.

17. Befestigungsanordnung nach einem der Ansprüche 14 bis 16, **dadurch gekennzeichnet, dass** im fertig montierten und eingestellten Zustand die wenigstens eine Sollbruchstelle (39) des Befestigungselements (10) getrennt ist und die Befestigungsabschnitte (11, 12) fest miteinander verrastet sind.

## Revendications

1. Fixation (10) pour la fixation d'une partie de fixation ou de recouvrement sur une partie de support, en particulier une partie du corps d'un véhicule à moteur, ayant une première section de fixation (11) qui a une surface externe (20) s'étendant le long d'un axe, une seconde section de fixation (12) qui a une ouverture (28) appropriée pour le logement de la première section de fixation (11), avec une surface interne (36) qui s'étend le long de l'axe, et un raccordement à cliquet conçu pour raccorder la surface externe (20) avec la surface interne (36), qui permet l'ajustement de la distance axiale entre la première section et la seconde section de fixation (11, 12), dans laquelle la première section de fixation (11) est raccordée à la seconde section de fixation (12) par au moins un point de rupture prédéterminé ou au moins un élément de rupture (39) prédéterminé, **caractérisée en ce que** l'une des sections de fixation (11, 12) est conçue comme un corps creux, dans laquelle une extrémité du corps creux a une ouverture d'insertion (15) pour un boulon de maintien (46) et dans lequel des moyens de maintien pour maintenir le boulon de maintien (46) sont agencés sur le côté interne du corps creux.

2. Fixation selon la revendication 1, **caractérisée en ce que** les première et seconde sections de fixation (11, 12) sont agencées à une certaine distance et sont raccordées Ensemble par une pluralité d'éléments de rupture (39) prédéterminés reliant la distance.

3. Fixation selon les revendications 1 ou 2, **caractérisée en ce que** le raccordement à cliquet est formé par une denture externe (22) sur la surface externe (20) et une denture interne (38) sur la surface interne (36) coopérant avec la denture externe (22).

4. Fixation selon la revendication 3, **caractérisée en ce que** la denture externe (22) ou la denture interne (38) est en forme de dent de scie, alors que les dents dans chaque cas ont un flanc de verrouillage raide et un flanc de rampe moins raide et les flancs de rampe de la denture externe (22) ou de la denture interne (38) d'une section de fixation (11 ou 12) sont tournés vers l'autre section de fixation (12 ou 11) dans chaque cas.

5. Fixation selon les revendications 3 ou 4, **caractérisée en ce que** la denture externe (22) ou la denture interne (38) d'une section de fixation (11 ou 12) a un espacement de dent plus petit que la denture interne (38) ou la denture externe (22) de l'autre section de fixation (12 ou 11).

6. Fixation selon l'une quelconque des revendications 3 à 5, **caractérisée en ce que** la denture externe (22) ou la denture interne (38) forme une bague fermée.

7. Fixation selon l'une quelconque des revendications 3 à 5, **caractérisée en ce que** la denture externe (22) ou la denture interne (38) s'étend sur au moins une section périphérique de la surface externe (20) ou de la surface interne (36).

8. Fixation selon la revendication 7, **caractérisée en ce que** des nervures de limitation (24) s'étendant dans la direction axiale sont agencées au niveau des extrémités périphériques de la ou des sections périphériques de la denture externe (22) ou de la denture interne (38).

9. Fixation selon l'une quelconque des revendications 3 à 8, **caractérisée en ce que** la première ou la seconde section de fixation (11, 12) est élastiquement déformable radialement par rapport à l'axe dans la région de la denture externe (22) ou de la denture interne (38).

10. Fixation selon l'une quelconque des revendications précédentes, **caractérisée en ce que** la surface externe (20) ou la surface interne (36) est prévue avec un revêtement de matériau adhésif qui peut être activé par pression ou chaleur.

11. Fixation selon l'une quelconque des revendications précédentes, **caractérisée en ce que** les moyens de maintien ont au moins un doigt de verrouillage flexible (16) qui s'étend à partir de l'ouverture d'insertion (15) obliquement vers l'intérieur dans la cavité.

12. Fixation selon l'une quelconque des revendications précédentes, **caractérisée en ce que** l'une des sections de fixation (12) a une bride (29) s'étendant radialement par rapport à l'axe.

13. Fixation selon l'une quelconque des revendications précédentes, **caractérisée en ce qu'**elle est formée d'un seul tenant avec un matériau synthétique thermoplastique.

14. Ensemble de fixation comprenant une fixation selon l'une quelconque des revendications précédentes, **caractérisé par** un boulon (46) avec une tige qui est fixée par une extrémité de pied à une partie de support (41) et a une tête épaissie (47) qui est fermement maintenue dans la première section de fixation (11) de la fixation (10) par des moyens de maintien qui s'encliquettent élastiquement et par une partie de logement raccordée avec une partie de recouvrement (40) qui a une poche (42) avec une ouverture latérale et une fente d'entrée (44), dans lequel la fixation (10) est insérée à travers l'ouverture latérale dans la partie de logement de sorte que la seconde section de fixation (12) se met en prise dans la poche (42).

15. Ensemble de fixation selon la revendication 14, **caractérisé en ce que** l'extrémité de pied du boulon (46) est soudée sur la partie de support (41).

16. Fixation selon les revendications 14 ou 15, **caractérisée en ce que** la partie de logement est intégrée dans la partie de recouvrement (40).

17. Ensemble de fixation selon l'une quelconque des revendications 14 à 16, **caractérisé en ce que**, à l'état assemblé fini et ajusté, le ou les points de rupture (39) prédéterminés de la fixation (10) sont séparés et les sections de fixation (11, 12) sont fermement verrouillées ensemble.
